# EUROPEAN PATENT APPLICATION

(11) **EP 2 595 278 A1**
(43) Date of publication of application: **22.05.2013**
(21) Application number: 11425279.4
(22) Date of filing: 16.11.2011
(51) Int. Cl.: H02J 7/35, B60L 8/00

(54) **Management of operation of an automotive electrical system featuring a renewable electrical power source**

(71) Applicant: C.R.F. Società Consortile per Azioni, 10043 Orbassano (Torino) (IT)
(72) Inventor: D'Ambrosio, Carlo, 10043 Orbassano (IT); Primon, Alfredo, 10043 Orbassano (IT)
(74) Representative: Bergadano, Mirko

(57) **Abstract**

An automotive electrical system (ES) comprising:
• an electronically-controllable alternator (SA);
• a renewable electrical power source (SP) having a work point where the maximum deliverable electrical power is supplied;
• an electrical power accumulator (B);
• electrical loads (L); and
• an automotive electronic control unit (ECU) configured to control electrical power generation in the automotive electrical system (ES) by:
• determining whether to individually or jointly exploit electrical power supplied by the renewable electrical power source (SP) and electrical power supplied by the electronically-controllable alternator (SA);
• if it is determined to exploit only electrical power supplied by the renewable electrical power source (SP), controlling the electronically-controllable alternator (SA) to cause it to bring the automotive electrical system (ES) to operate in an operating point where the renewable electrical power source (SP) supplies the maximum deliverable electrical power;
• if it is determined to jointly exploit both electrical power supplied by the renewable electrical power source (SP) and electrical power supplied by the electronically-controllable alternator (SA), consequently controlling the electronically-controllable alternator (SA) to cause it to bring the automotive electrical system (ES) to operate in an operating point where the renewable electrical power source (SP) and the electronically-controllable alternator (SA) jointly supply an overall electrical power that, over time, depends on the associated fuel consumption of the internal combustion engine (ICE) of the motor vehicle (MV).

## Description

### TECHNICAL FIELD OF INVENTION

The present invention relates in general to the exploitation of renewable electrical energy sources on motor vehicles, and, in particular, to the management of operation of automotive electrical systems featuring solar panels.

### STATE OF THE ART

Amongst the measures that car manufacturers are considering with increasingly greater attention to reduce the environmental impact of motor vehicles propelled by internal combustion engines, renewable electrical power sources are gaining considerable interest, namely electrical power sources that are based on alternative power sources to traditional fossil sources and which, due to their intrinsic nature, are regenerable or are not "depletable" on the human time scale and, by extension, the exploitation of which does not jeopardise natural resources for future generations.

Amongst the renewable electrical power sources that can be integrated on motor vehicles, solar panels are gaining particular interest, the use of which would enable to entirely or partially meet the electrical power requirements of the on-board electrically powered and/or electrically driven vehicle systems.

In civil applications, solar panels are typically electrically connected to the electrical mains via electronic devices based on high-efficiency DC/DC electrical power converters designed to implement maximum power point tracking (MPPT) techniques, known per se and based on measured electrical quantities such as the electrical current and voltage supplied by the solar panel, solar irradiation, etc., and through which the solar panels are cause to operate in operating points of maximum energy efficiency where they supply the maximum electrical power.

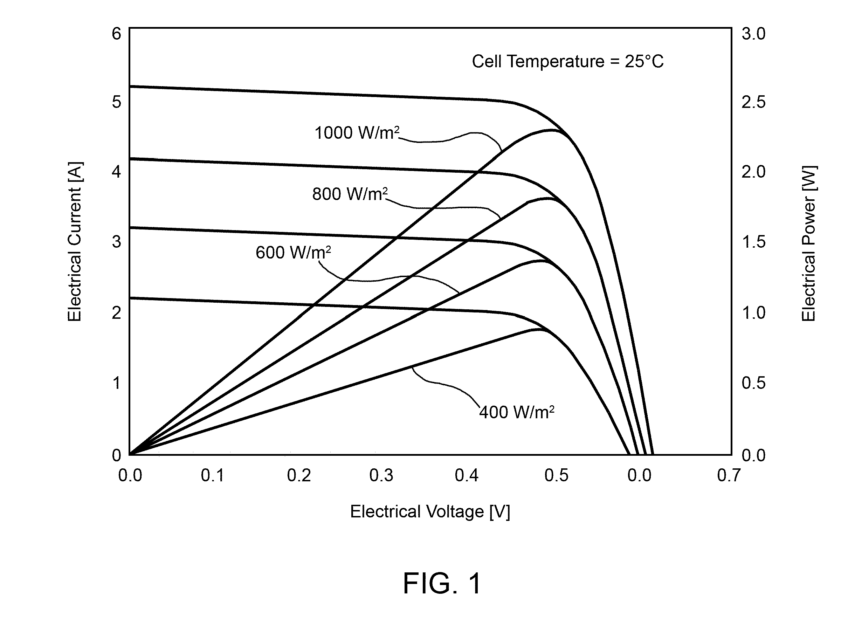

The energy efficiency of a solar panel depends on the electrical voltage supplied by the solar panel, as illustrated in Figure 1, which shows a graph of the development of the electrical current and electrical power supplied by a solar panel versus the supplied electrical voltage and for different values of incident solar radiation. As may be appreciated, depending on the incident solar radiation, the electrical voltage at which the maximum electrical power is supplied is in the range from 0.5 to 0.6 V. Furthermore, this range also varies from panel to panel of the same type due to the manufacturing dispersion of the solar panels.

### SUBJECT AND SUMMARY OF THE INVENTION

The Applicant has carried out a preliminary research aimed at identifying and assessing the benefits that featuring of solar panels on a motor vehicle might offer to a global energy management strategy therefor.

This research has resulted in the following three main benefits being identified:
- Recharging the electrical battery of the motor vehicle when it is parked: when the motor vehicle is off after heavy use of the electrical battery, the latter is generally in a low charge state. This, in combination with the quiescent electrical current drain that inevitably occurs, can be the cause of restarting problems with the internal combustion engine, after the motor vehicle has been left parked for a certain length of time. Clearly, under favourable environmental conditions, the use of a solar panel can completely or partially resolve this problem. In consequence, it is evident that a global energy management strategy cannot fail to take into consideration a preliminary assessment of the battery's charge state and, when it is low, give priority to using the electrical power generated by the solar panel for recharging the battery with respect to other functions, such as air conditioning, of the motor vehicle's passenger compartment;
- Power supplying the motor vehicle's electrical system when the motor vehicle is being driven: when the motor vehicle is being driven, the electrical loads of the motor vehicle need a certain amount of electrical power to operate, which in the absence of a solar panel is supplied by the alternator that, as is known, is driven by the internal combustion engine. The use of a solar panel could therefore totally or partially satisfy this need; and
- Operating the electrical loads of the motor vehicle dedicated to improve on-board comfort when the motor vehicle is parked: when the motor vehicle is off, the electrical current generated by a solar panel can be used to operate electrical loads dedicated to improve on-board comfort, the main one being represented by the motor vehicle's passenger compartment heating, ventilation and air conditioning (HVAC) system.

When the motor vehicle is parked in the sun, even for just brief periods, the passenger compartment can become unpleasantly hot. In the event of strong solar irradiation, the solar panel is able to generate electrical currents high enough to enable cooling of the passenger compartment to be maximized by means of fresher air being sucked in from the outside that, once it is caused to circulate in the motor vehicle's passenger compartment, is expelled back to the outside. Given that this takes place by means of the existing ducting, the hot air that would otherwise accumulate in the ducting when the motor vehicle is parked is also expelled, so that when the heating, ventilation and air conditioning system is subsequently switched on by the driver or a passenger upon getting inside the motor vehicle's passenger compartment, fresher air is immediately available.

Aware of these benefits, the Applicant has then further broadened this research for the purpose of identifying a specific solution that, always based on the maximum power point tracking techniques, would enable operation of an automotive electrical system featuring solar panels to be managed without the need for any high-efficiency DC/DC electrical power converter, which is relatively bulky and expensive, but by using just components already present on board the motor vehicle.

The aim of the present invention is therefore providing a solution enabling the above-indicated objectives to be achieved.

This aim is achieved by the present invention in that it relates to an automotive electrical system, as defined in the appended claims.

In essence, the idea underlying the present invention is assigning the function of regulating the operating point of the solar panels to a so-called smart alternator, which is an electrical component that is increasingly present on motor vehicles, and that is basically an electronically-controllable alternator whose output electrical quantities (electrical current and voltage) are regulated in response to an electrical adjustment command constituted by an electrical adjustment current. Therefore, as both the smart alternator and the solar panels are connected to the automotive electrical system, by opportunely acting on the electrical adjustment command provided to the smart alternator it is possible to regulate the electrical voltage of the entire electrical system, in this way causing the solar panels to operate in maximum efficiency operating points where they supply the maximum electrical power.

### BRIEF DESCRIPTION OF DRAWINGS

Figure 1 shows a graph of the development of the electrical current and electrical power supplied by a solar panel versus the supplied electrical voltage and for different values of incident solar radiation;
Figure 2 shows a block diagram of an automotive electrical system designed to implement the present invention;
Figure 3 shows a block diagram relating to the electrical connection of a solar panel to the automotive electrical system shown in Figure 2; and
Figures 4, 5 and 6 show self-explanatory flowcharts of the operations carried out by an electronic control unit of the automotive electrical system for managing the supply of electrical power in the automotive electrical system shown in Figure 2.

### DETAILED DESCRIPTION OF PREFERRED EMBODIMENTS OF THE INVENTION

The present invention is now described in detail with reference to the attached figures to enable a person skilled in the art to embody and use it. Various modifications to the described embodiments will be readily obvious to skilled persons, and the generic principles described herein can be applied to other embodiments and applications without departing from the scope of protection of the present invention, as defined in the appended claims. Therefore, the present invention should not be considered as limited to the embodiments described and illustrated herein, but be conceded the broadest scope of protection consistent with the claimed characteristics.

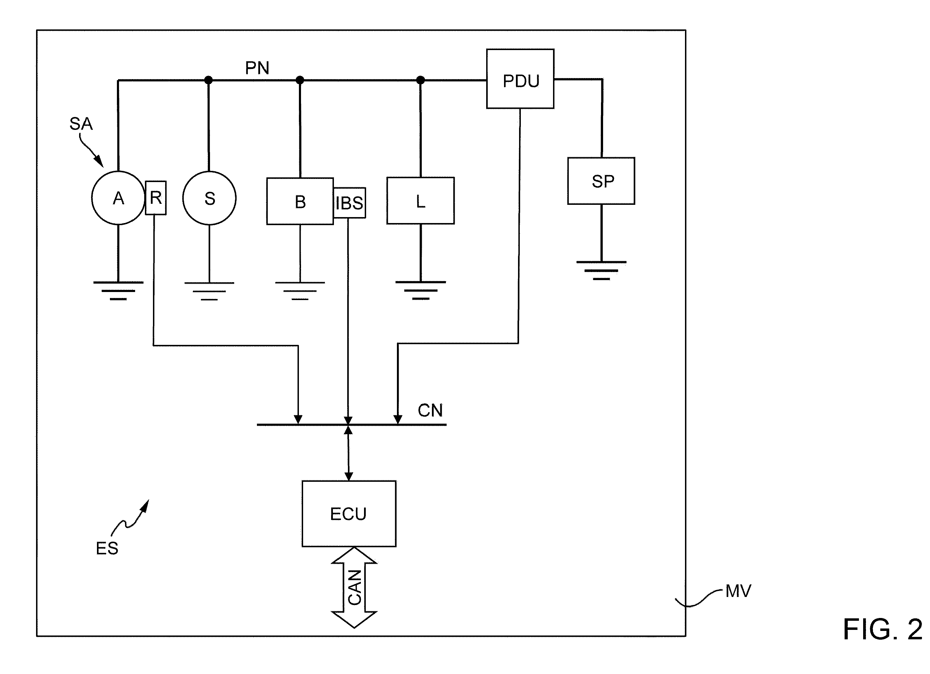

Figure 2 shows, by way of a non-limitative example, a block diagram of an electrical system ES of a motor vehicle MV equipped with an internal combustion engine ICE.

The electrical system ES comprises:
- an electrical power distribution network PN for distributing electrical power generated in the electrical system ES to the various components of the electrical system ES;
- a communication network CN for distributing electrical control signals to electrically controlled devices of the electrical system ES, which network can alternatively be a wired network that directly point-to-point connects the electrically controlled devices, a LIN (Local Interconnect Network) or other opportune network;
- an electrical power accumulator, which is connected to the electrical power distribution network PN and basically comprises an electrical battery B, which can be controlled by a battery management system, the functionality of which on electric/hybrid vehicles is provided by an additional component integrated in the battery pack, while in normal production systems it is provided by a pre-existing, non-additional component, such as the electronic control unit of the internal combustion engine or by the onboard computer;
- a monitoring device for monitoring parameters of the electrical power accumulation system, which basically comprises an intelligent battery sensor (IBS), which is electrically connected to the communication network CN, is couple to the battery B to measure electrical quantities, such as the supplied electrical current and voltage, and/or physical quantities, such as the internal temperature, etc., and is designed to determine the state of charge of the battery B based on the measured electrical and/or physical quantities and to communicate, through the communication network CN, the measured electrical and/or physical quantities and those calculated based thereon;
- a closed-loop electronically-controllable electrical power generator operable to generate electrical power, which is electrically connected to both the electrical power distribution network PN and the communication network CN and basically comprises a smart alternator SA, which is nothing other than a closed-loop electronically-controllable alternator, basically comprising an alternator A, i.e. an electrical power generator operable to produce electrical power, driven by the internal combustion engine ICE of the motor vehicle MV by means of a belt, and equipped with a regulator R able to closed-loop control the electrical output quantities of the alternator A, namely electrical current and voltage, in response to an electrical adjustment command constituted by a target or reference electrical voltage to which the output electrical voltage of the alternator must be brought. In this regard, reference can be made to European patent application EP 10425352.1, filed on 12/11/2010, the content of which is included here for reference;
- a starter motor S, which is electrically connected to the electrical power distribution network PN;
- a renewable electrical power source, which is electrically connected to the electrical power distribution network PN and basically comprises one or more solar panels SP, if necessary equipped with sensors (not shown) for defining the energy generation efficiency of the solar panel(s);
- an electrical power distribution unit PDU, which is electrically connected to both the electrical power distribution network PN and the communication network CN and is expressly dedicated to the connection, disconnection and protection of the solar panel(s) SP; in particular, the electrical power distribution unit PDU is not of the type comprising a DC/DC electrical power converter and can be optionally equipped with a specially provided electrical current sensor;
- electrical loads L, if necessary equipped with control electronics to enable the disconnection, choking or adjustment/stabilization of the supply voltage, which are electrically connected to the electrical power distribution network PN and represent, as a whole, all of the electrically powered/driven on-board systems of the motor vehicle MV, both those that are safety-critical, such as power steering, braking system and associated subsystems, such as ABS (Antilock Braking System) and ESP (Electronic Stability Program), lighting system, windscreen wipers, etc., and those that are non-safety-critical, such as air conditioning system, infotainment system, comprising, amongst other things, car radio, etc.; and
- an electronic control unit ECU, which is electrically connected to both the communication network CN and a Controller Area Network (CAN) of the motor vehicle MV and can alternatively be an electronic control unit specifically dedicated to controlling the electrical system ES and therefore be separate from the other on-vehicle electronic control units, for example the electronic control unit of the motor vehicle's power unit and electronic control unit of the internal combustion engine, and communicate with the latter through the CAN network, or be integrated together with the other on-vehicle electronic control units to form a single electronic control unit of the motor vehicle MV.

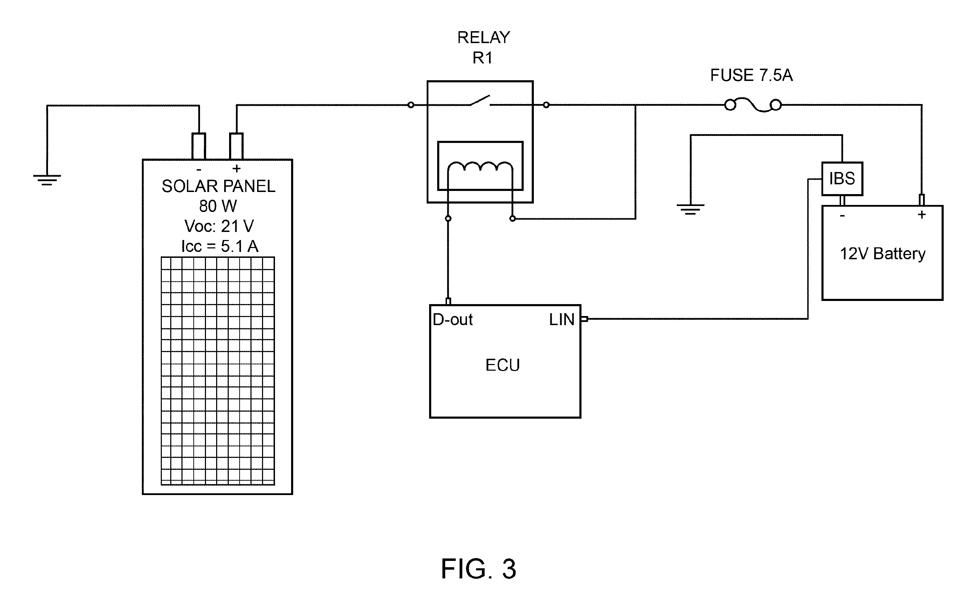

Figure 3 shows a more detailed block diagram of the electrical connection of a solar panel SP to the electrical power distribution network PN of the electrical system ES. As may be appreciated, the electrical power distribution unit PDU comprises a relay R1, the open/closed operating state of which and, in consequence, the connection/disconnection of the solar panel SP from the electrical power distribution network PN, is controlled by the electronic control unit ECU based on the electrical voltage and current supplied by the electrical battery B, as well as the state of charge of the electrical battery B, measured by the intelligent battery sensor IBS and communicated to the electronic control unit ECU through the communication network CN.

In particular, when the motor vehicle MV is parked with an ignition key removed from an ignition lock cylinder, the electronic control unit ECU is programmed to close the relay R1 when the solar panel SP is in a condition to supply electrical power and the electrical battery B needs to be electrically recharged, and to open the relay R1 when the solar panel SP does not supply electrical power or the electrical battery B has been recharged.

In general, the electronic control unit ECU is programmed to manage operation of the electrical system ES and, in particular, to manage generation of electrical power by the on-vehicle electrical power sources.

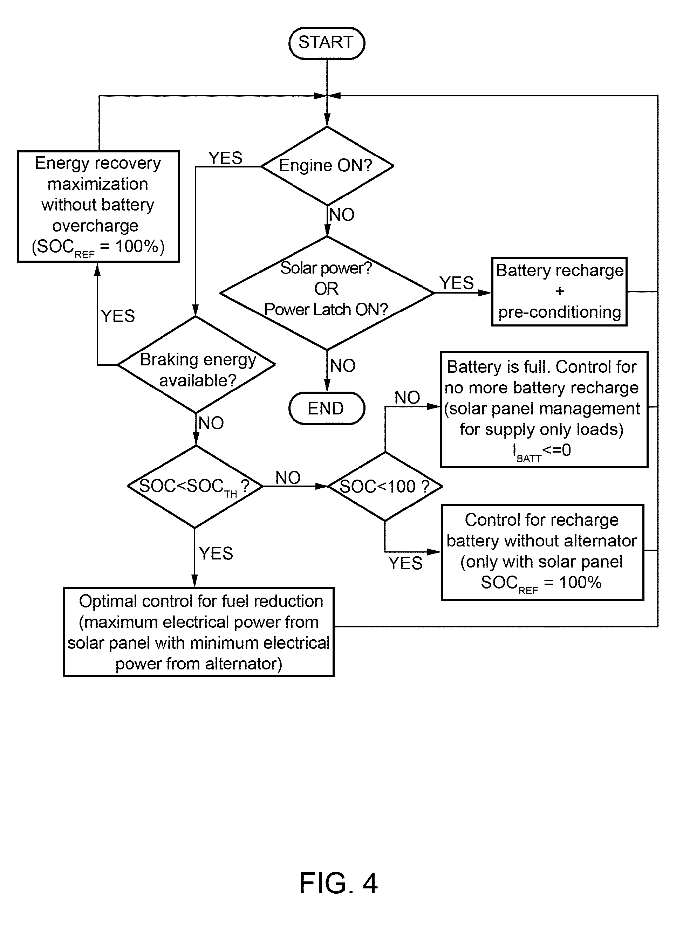

In particular, the electronic control unit ECU is programmed to find the most energy-efficient way to generate electrical power on board the motor vehicle MV and consequently manage the on-vehicle electrical power sources by implementing the operations described in greater detail in the following, with reference to the self-explanatory flowchart shown in Figure 4.

In particular, in order to find the most energy-efficient way to generate electrical power on board the motor vehicle MV, the electronic control unit ECU is programmed to determine firstly:
- if the internal combustion engine ICE is on or off and, if it is on, whether or not it consumes fuel, and
- if the solar panel SP is in a condition to supply electrical power, and, if so, whether electrical power generated by the solar panel SP is enough to meet the electrical power demand of the electrical loads L.

Afterwards, the electronic control unit ECU is programmed to cause the following to be exploited:
- only the electrical power supplied by the solar panel SP if:
   a) the internal combustion engine ICE is determined to be off, this being the operating condition in which the smart alternator SA, being driven directly by the internal combustion engine ICE, is consequently not in a condition to supply electrical power, or
   b) the internal combustion engine ICE is determined to be on and to consume fuel, and the solar panel SP is determined to be in a condition to fully meet the electrical power demand of the electrical loads L; and
- both electrical power jointly supplied by the solar panel SP and electrical power supplied by the electronically-controllable alternator SA if:
   c) the internal combustion engine (ICE) is determined to be on and to consume fuel, but the solar panel SP is determined not to be in a condition to fully meet the electrical power demand of the electrical loads L, or
   d) the internal combustion engine (ICE) is determined to be on and to consume no fuel, this operating condition occurring when the internal combustion engine ICE operates in fuel cut-off, namely it is driven and no fuel is injected therein, and which is commonly known as "regenerative braking", as the kinetic energy of the motor vehicle MV can be converted into electrical power.

If the electronic control unit ECU determines that it is energetically more convenient to exploit just the electrical power supplied by the solar panel SP, the electronic control unit ECU is consequently programmed to:
- minimize a first cost function such that its minimization results in an operating point of the electrical system ES to be determined, where the solar panel SP can supply the maximum deliverable electrical power, but without the smart alternator SA simultaneously supplying electrical power, and
- consequently control the smart alternator SA to cause it to bring the electrical system ES to operate in the so-determined operating point, where the solar panel SP consequently supplies the maximum deliverable electrical power, without the smart alternator SA simultaneously supplying electrical power.

Therefore, minimization of the cost function essentially results in an electrical adjustment command being determined for the smart alternator SA, such that, once the command is supplied to the smart alternator SA, the latter responsively bring the electrical system ES to operate in an operating point where the solar panel SP supplies the maximum deliverable electrical power without the smart alternator SA simultaneously supplying electrical power.

It is pointed out that the operating point of the electrical system ES where the solar panel SP supplies the maximum deliverable electrical power without the smart alternator SA simultaneously supplying electrical power is, in general, different from the operating point where the solar panel SP supplies the absolute maximum deliverable electrical power, even if these two operating points can also coincide under certain operating conditions. In fact, in general, the absolute maximum deliverable electrical power could be supplied by the solar panel SP in an operating point of the electrical system ES where the smart alternator SA nevertheless supplies electrical power.

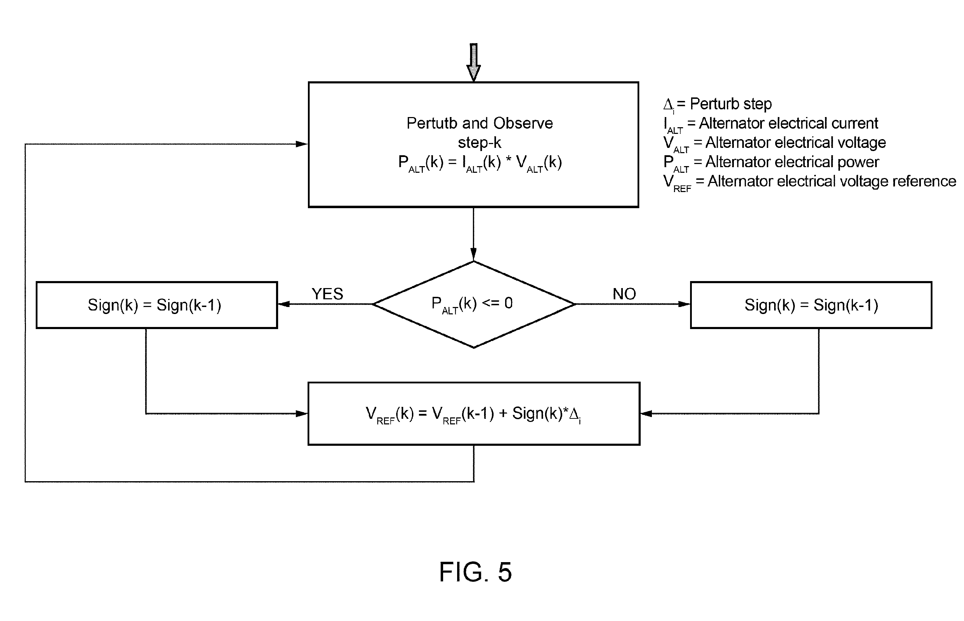

The operations of minimizing the first cost function are illustrated in the self-explanatory flowchart shown in Figure 5, in which V_{REF} indicates the operating point (electrical voltage) of the electrical system ES resulting from the minimization of the first cost function.

Instead, if the electronic control unit ECU determines that it is more energetically convenient to jointly exploit both electrical power supplied by the solar panel SP and electrical power supplied by the smart alternator SA, the electronic control unit ECU is consequently programmed to:
- minimize a second cost function, different from the first one, such that its minimization results in an operating point of the electrical system ES being determined, where the overall electrical power jointly supplied by the solar panel SP and the smart alternator SA is:
   e) the absolute maximum deliverable electrical power, if the internal combustion engine ICE is determined to be on and to consume no fuel (fuel cut-off), and
   f) such as to minimize, over time, the associated fuel consumption of the internal combustion engine ICE, if the latter is determined to be on and to consume fuel, but the solar panel SP is not in a condition to fully meet the electrical power demand of the electrical loads L; and
- consequently control the smart alternator SA to cause it to bring the electrical system ES to operate in the so-determined operating point.

The second cost function essentially comprises two sub-functions:
- a first sub-function which is used when the internal combustion engine ICE is determined to be on and to consume no fuel, and the minimization of which results in an electrical adjustment command being determined for the smart alternator SA such that, once the command is supplied to the smart alternator SA, the latter responsively bring the electrical system ES to operate in an operating point where the solar panel SP and the smart alternator SA jointly supply the absolute overall maximum deliverable electrical power,
- a second sub-function which is used when the internal combustion engine ICE is determined to be on and to consume fuel, and the solar panel SP is determined not to be in a condition to fully meet the electrical power demand of electrical loads L, and the minimization of which results in an electrical adjustment command being determined for the smart alternator SA such that, once the command is supplied to the smart alternator SA, the latter responsively bring the electrical system ES to operate in an operating point where the solar panel SP and the smart alternator SA jointly supply electrical power to which, over time, the minimum fuel consumption of the internal combustion engine ICE is associated.

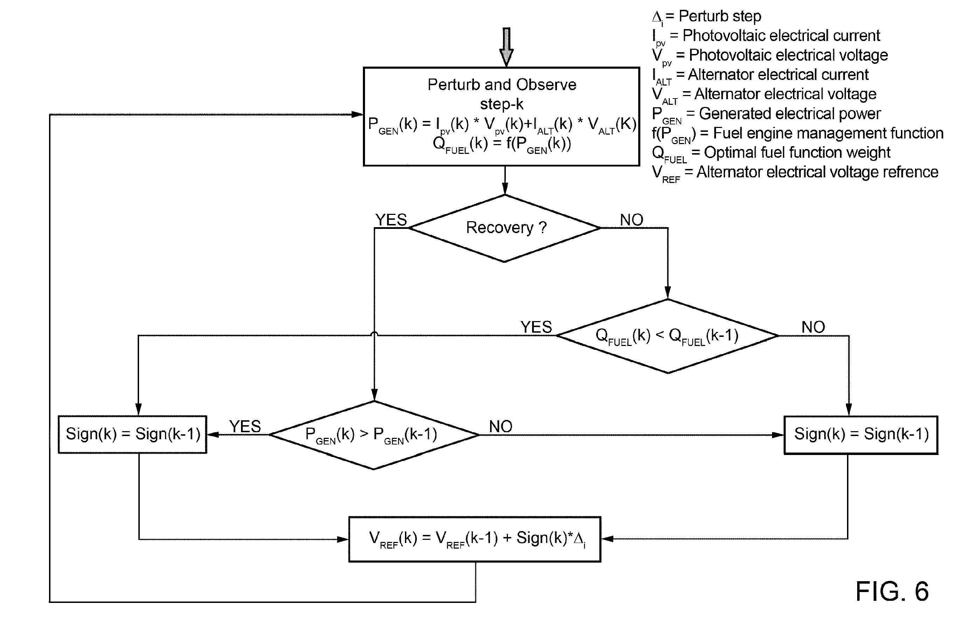

The operations of minimizing the second cost function are illustrated in the self-explanatory flowchart shown in Figure 6, in which V_{REF} indicates the operating point (electrical voltage) of the electrical system ES resulting from the minimization of the cost function.

It is also pointed out that the overall electrical power jointly supplied by the solar panel SP and the smart alternator SA with the minimum associated fuel consumption could be insufficient to meet the electrical power demand of the electrical loads L, in which case the missing electrical power is drawn from the electrical battery B, which consequently runs down, and is, in any case, at most equal to that required by the electrical loads L, in which case the electrical battery B is not involved, but never higher than the electrical power demand of the electrical loads L, as this situation would be in conflict with the need to generate electrical power with the minimum associated fuel consumption.

In addition, the two conditions e) and f) indicated above require operating points of the electrical system ES that are usually different in terms of electrical voltage and depend on the environmental conditions and operating conditions of the motor vehicle MV.

Furthermore, as may be appreciated, the two above-mentioned cost functions differ from each other in that the second cost function is designed to take into account fuel consumption of the internal combustion engine ICE of the motor vehicle MV associated with the generation of electrical power by the solar panel SP and the smart alternator SA, as this cost function is used when the smart alternator SA is operated to generate electrical power and therefore its use adversely affects the fuel consumption of the internal combustion engine ICE, while the first cost function is designed not to take into account the fuel consumption of the internal combustion engine ICE associated with generation of electrical power by the solar panel SP, as this cost function is used when the electrical power is generated exclusively by the solar panel SP and therefore there are no negative effects on fuel consumption deriving from the operation of the smart alternator SA.

Thus, for this reason, in the above-indicated situation e), both electrical power jointly generated by the solar panel SP and electrical power generated by the smart alternator SA are exploited, as both are in fact generated with no associated fuel consumption, while in the above-indicated situation f), generation of electrical power is carried out whilst minimizing fuel consumption at the same time.

In addition, depending on electrical absorption characteristics of the electrical system ES, the operating point where the electrical system ES is caused to operate in the above-indicated situation f) could coincide with the operating point where the solar panel SP supplies maximum deliverable electrical power.

Furthermore, in the above-indicated situation e), the overall electrical power jointly generated by the solar panel SP and the smart alternator SA can be and, in general, is higher than that required by the electrical loads L, and, as a consequence, the electronic control unit ECU is programmed to cause the surplus electrical power to be used to recharge the electrical battery B. In consequence, the minimization of the second cost function then determines the setting up of an operating point of the electrical system ES that also maximizes the electrical current supplied to the electrical battery B, the electrical current of which represents the indicator of an electrical power recovery rate: in fact, the higher the electrical current supplied to the electrical battery B, the higher the kinetic energy that is recovered in the form of electrical power.

Finally, when the internal combustion engine ICE is determined to be off, the electronic control unit ECU is programmed to cause:
- the solar panel SP to be connected to the electrical power distribution network PN and the electrical power generated thereby to be exploited to recharge the electrical battery B, and
- when the state of charge of the electrical battery B reaches 100% or when the electrical voltage supplied by the electrical battery B exceeds a given threshold value, the solar panel SP to be disconnected from the electrical power distribution network PN.

If the electronic control unit ECU does not have to perform other functions, it enters a state of minimum energy consumption.

If instead the solar panel SP is not in a condition to supply electrical power, for example during the night or when clouds reduce the solar radiation incident on the solar panel SP too much, the electronic control unit ECU is programmed to remain in a wait state for a certain period of time in order to check if the solar radiation incident on the solar panel SP increases again and, if this does not happen, to enter a state of minimum energy consumption.

From that described above, it can be inferred how the electronic control unit ECU is programmed to implement the various functions, individually or in a group, which result in corresponding electrical adjustment commands being generated for the smart alternator SA. Whatever the configuration of the implemented functions, the electronic control unit ECU is programmed to optimize the generation of electrical power on board the motor vehicle in order to minimize fuel consumption, yet at the same time guaranteeing that the following requirements are met:
- availability of the electrical power required by the electrical loads L, such that the latter are always powered according to their needs and are not penalized to favour a reduction in fuel consumption;
- cranking capability, such that the availability of electrical power for restarting the internal combustion engine ICE after each switch-off is always guaranteed; and
- increase in the life cycle of the components of the electrical system ES, such that the life of the components of the electrical system ES is not penalized to favour a reduction in fuel consumption.

With regard to the electrical battery B, the increase in the life cycle thereof can be obtained, for example, by monitoring its condition by means of the intelligent battery sensor IBS and opportunely managing the charge and discharge cycles.

The reduction in fuel consumption is achieved through brake energy recovery and, more in general, through kinetic energy recovery, these functions being performed by the smart alternator SA, through opportune regulation of the supplied electrical voltage, without the need for any DC/DC converter.

From an examination of what has been previously described, the advantages that can be attained with the present invention are evident. In particular, it enables solar panels to be integrated in motor vehicles and to manage their operation without the need for any high-efficiency DC/DC electrical power converter, but using just the components already present on board the motor vehicles.

Finally, it is understood that changes and modifications may be made to that described and shown herein without departing from the scope of protection of the present invention, as defined in the appended claims.

For example, the present invention finds application not only in the integration of solar panels in motor vehicles, but in general in the integration in motor vehicles of any renewable electrical power source, present or future, that, due to its nature, can be integrated in motor vehicles, for example an aerogenerator, and that requires tracing the operating point where the renewable electrical power source supplies the maximum deliverable electrical power, i.e. that requires regulation of the electrical voltage of the electrical system to which this renewable electrical power source is connected in order to supply the maximum deliverable electrical power.

In addition, the present invention is suitable both for real-time implementation, as described above, where the regulation of on-vehicle electrical power sources is performed based on information known up to that instant, and for predictive implementation, where the regulation of on-vehicle electrical power sources is performed based on information related to the route that the motor vehicle must still drive along and which is provided by an on-vehicle navigation system. If, for example, the motor vehicle is about to drive along a downhill stretch of road, during which the internal combustion engine will operate in a driven condition with no fuel consumption, the electronic control unit may be programmed to interrupt the generation of electrical power by the smart alternator and wait for the motor vehicle to drive along the downhill stretch of road, during which the required electrical power can be generated by conversion of the kinetic energy of the motor vehicle MV during regenerative braking.

## Claims

1. An automotive electronic control unit (ECU) for an automotive electrical system (ES) for a motor vehicle (MV) having an internal combustion engine (ICE),
the automotive electrical system (ES) comprising:
• an electronically-controllable alternator (SA);
• a renewable electrical power source (SP);
• an electrical power accumulator (B); and
• electrical loads (L);
wherein the automotive electronic control unit (ECU) is configured to control electrical power generation in the automotive electrical system (ES) by:
• determining whether to individually or jointly exploit electrical power supplied by the renewable electrical power source (SP) and electrical power supplied by the electronically-controllable alternator (SA);
• if it is determined to exploit only electrical power supplied by the renewable electrical power source (SP), controlling the electronically-controllable alternator (SA) to cause it to bring the automotive electrical system (ES) to operate in an operating point where the renewable electrical power source (SP) supplies the maximum deliverable electrical power, without the electronically-controllable alternator (SA) simultaneously supplying electrical power;
• if it is determined to jointly exploit both electrical power supplied by the renewable electrical power source (SP) and electrical power supplied by the electronically-controllable alternator (SA), consequently controlling the electronically-controllable alternator (SA) to cause it to bring the automotive electrical system (ES) to operate in an operation point where the renewable electrical power source (SP) and the electronically-controllable alternator (SA) jointly supply an overall electrical power that depends, over time, on the associated fuel consumption of the internal combustion engine (ICE).

2. An automotive electronic control unit (ECU) according to claim 1, further configured to:
• if it is determined to jointly exploit both electrical power supplied by the renewable electrical power source (SP) and electrical power supplied by the electronically-controllable alternator (SA), consequently control the electronically-controllable alternator (SA) to cause it to bring the automotive electrical system (ES) to operate in an operating point where the renewable electrical power source (SP) and the electronically-controllable alternator (SA) jointly supply:
- the absolute overall maximum deliverable electrical power, if the associated fuel consumption of the internal combustion engine (ICE) of the motor vehicle (MV) is zero; or, otherwise
- an overall electrical power to which, over time, a minimum fuel consumption of the internal combustion engine (ICE) is associated.

3. An automotive electronic control unit (ECU) according to claim 1 or 2, configured to determine whether to individually or jointly exploit electrical power supplied by the renewable electrical power source (SP) and electrical power supplied by the electronically-controllable alternator (SA) by:
• determining whether the internal combustion engine (ICE) of the motor vehicle (MV) is on or off and, if it is on, whether or not it is consuming fuel;
• determining whether the renewable electrical power source (SP) is in condition to supply electrical power and, if so, whether the supplied electrical power is enough to meet the electrical power demand of the electrical loads (L);
• determining to exploit only electrical power supplied by the renewable electrical power source (SP) if:
- the internal combustion engine (ICE) is determined to be off; or
- the internal combustion engine (ICE) is determined to be on and to consume fuel, and the renewable electrical power source (SP) is determined to be in condition to supply enough electrical power to meet the electrical power demand of the electrical loads (L); and
• determining to jointly exploit both electrical power supplied by the renewable electrical power source (SP) and electrical power supplied by the electronically-controllable alternator (SA) if:
- the internal combustion engine (ICE) is determined to be on and to consume no fuel; or
- the internal combustion engine (ICE) is determined to be on and to consume fuel, and the renewable electrical power source (SP) is determined not to be in condition to supply enough electrical power to meet the electrical power demand of the electrical loads (L).

4. An automotive electronic control unit (ECU) according to any one of the preceding claims, further configured to:
• if it is determined to exploit only electrical power supplied by the renewable electrical power source (SP):
- minimize a first cost function such that its minimization results in an operating point of the automotive electrical system (ES) being determined where the renewable electrical power source (SP) supplies the maximum deliverable electrical power without the electronically-controllable alternator (SA) simultaneously supplying electrical power; and
- consequently control the electronically-controllable alternator (SA) to cause it to bring the automotive electrical system (ES) to operate in the so-determined operating point, thereby causing the renewable electrical power source (SP) to supply the maximum deliverable electrical power without the electronically-controllable alternator (SA) simultaneously supplying electrical power; and
• if it is determined to jointly exploit electrical power supplied by the renewable electrical power source (SP) and electrical power supplied by the electronically-controllable alternator (SA):
- minimize a second cost function, different from the first cost function, such that its minimization results in an operating point of the automotive electrical system (ES) being determined where overall electrical power jointly supplied by the renewable electrical power source (SP) and the electronically-controllable alternator (SA) is:
- the maximum deliverable electrical power, if the internal combustion engine (ICE) is determined to be on and to consume no fuel, and
- such as to minimize, over time, the associated fuel consumption of the internal combustion engine (ICE) if the internal combustion engine (ICE) is determined to be on and to consume fuel, but the renewable electrical power source (SP) is not in condition to supply enough electrical power to meet the electrical power demand of the electrical loads (L); and
- consequently control the electronically-controllable alternator (SA) to cause it to bring the automotive electrical system (ES) to operate in the so-determined operating point.

5. An automotive electronic control unit (ECU) according to any one of the preceding claims, wherein the two cost functions differ from each other in that the second cost function is designed to take fuel consumption of the internal combustion engine (ICE) into account, while the first cost function is not.

6. An automotive electronic control unit (ECU) according to any one of the preceding claims, further configured to cause the electrical power accumulator (B) to be electrically recharged with electrical power supplied by the renewable electrical power source (SP) when:
- the internal combustion engine (ICE) is determined to be off;
- the renewable electrical power source (SP) is determined to be in condition to supply electrical power;
- the motor vehicle (MV) is determined to be in a parked condition; and
- an ignition key of the motor vehicle (MV) is determined to be removed from an ignition lock cylinder.

7. An automotive electrical system (ES) comprising:
• an electronically-controllable alternator (SA);
• a renewable electrical power source (SP);
• an electrical power accumulator (B);
• electrical loads (L); and
• an automotive electronic control unit (ECU) according to any one of the preceding claims.

8. An automotive electrical system (ES) according to any one of the preceding claims, wherein the renewable electrical power source comprises a solar panel (SP).

9. A motor vehicle (MV) comprising an electrical system (ES) according to claim 7 or 8.

10. Software loadable in an automotive electronic control unit (ECU) of an automotive electrical system (ES) and designed to cause, when executed, the automotive electronic control unit (ECU) to become configured as claimed in any one of the preceding claims 1 to 6.
